# EUROPÄISCHE PATENTANMELDUNG

(11) **EP 3 787 251 A1**
(43) Veröffentlichungstag der Anmeldung: **03.03.2021**
(21) Anmeldenummer: 19194688.8
(22) Anmeldetag: 30.08.2019
(51) Int. Cl.: H04L 29/06, G06F 21/64, H04L 9/32, H04W 12/10, H04L 29/08

(54) **VERFAHREN, KOMMUNIKATIONSVORRICHTUNG UND NETZWERKAPPLIKATION ZUM GESCHÜTZTEN ÜBERMITTELN VON EINEM DATENSATZ**

(71) Anmelder: Siemens Aktiengesellschaft, 80333 München (DE)
(72) Erfinder: Falk, Rainer, 85586 Poing (DE)

(57) **Zusammenfassung**

Mit der Erfindung kann beispielsweise die Sicherheit von Blockketten-Orakeln verbessert werden, indem zusätzliche Informationen in Form von Erfassungsparametern durch eine Netzwerkapplikation wie einer Blockkette ausgewertet werden.

## Beschreibung

Die Aufgabe der Erfindung ist es, eine Alternative zum Stand der Technik zu bilden.

Nachfolgend werden Aspekte der Erfindung erläutert.

Gemäß einem ersten Aspekt betrifft die Erfindung eine Kommunikationsvorrichtung, die z. B. als eine Komponente einer Netzwerkapplikation wie einer Blockkette ausgebildet ist, aufweisend:
- eine Kommunikationsschnittstelle, wobei die Kommunikationsschnittstelle dazu eingerichtet ist, mit einer Netzwerkapplikation zu kommunizieren;
- ein Erfassungsmodul, wobei
   ∘ das Erfassungsmodul dazu eingerichtet ist, Daten zu erfassen und in einem Datensatz (z. B. eine Transaktion) zu speichern,
   ∘ das Erfassungsmodul Erfassungsparameter des Erfassens der Daten in dem Datensatz speichert;
- ein Übermittlungsmodul, wobei
   ∘ das Übermittlungsmodul dazu eingerichtet ist, den Datensatz mittels einer Prüfsumme zu schützen und mittels der Kommunikationsschnittstelle an die Netzwerkapplikation zu übermitteln.

Beispielsweise kann der Datensatz Steuerbefehle umfassen, um beispielsweise eine Steuertransaktion zu realisieren, die in einer Netzwerkapplikation gespeichert wird und/oder von einer Komponente der Infrastruktur der Netzwerkkomponente ausgeführt wird.

Die Kommunikationsvorrichtung kann beispielsweise mittels Komponente (z. B. einem Knoten oder Gerät) einer Netzwerk-Applikation (oder auch als Netzwerkapplikation bezeichnet) und/oder einem verteilten Datenbanksystem und/oder einer Blockkette oder einer Kombination der genannten Möglichkeiten realisiert sein. Die Kommunikationsvorrichtung kann beispielsweise auch eine Netzwerk-Applikation oder ein verteiltes Datenbanksystem oder eine Blockkette sein oder als solche realisiert sein. Beispielsweise können Komponenten (z. B. ein Knoten) der Infrastruktur der Netzwerkapplikation (z. B. eine Blockkette) die Kommunikationsvorrichtung umfassen.

Die Technologie von Blockketten (engl. Blockchains) bzw. "Distributed Ledgers" ist aktuell eine intensiv diskutierte Technologie, die insbesondere als verteiltes Datenbanksystem oder als Netzwerk-Applikation realisiert sein kann. Neben Anwendungen für dezentrale Bezahlsysteme (z. B. Bitcoin) werden in der Finanzindustrie neue Anwendungsmöglichkeiten entwickelt. Insbesondere können Transaktionen zwischen Firmen dadurch ohne Vermittler bzw. Clearing-Stelle manipulationsgeschützt realisiert werden. Dies ermöglicht neue Geschäftsmodelle ohne einen vertrauenswürdigen Vermittler, es reduziert die Transaktionskosten, und es können flexibel neue digitale Dienste angeboten werden, ohne eine dafür speziell eingerichtete Infrastruktur und Vertrauensbeziehungen einrichten zu müssen. Ein durch eine Blockchain geschützter Transaktionsdatensatz (oder kurz Transaktion) umfasst z. B. Programmcode, der auch als sogenannter "Smart Contract" bezeichnet werden kann.

Sofern es in der nachfolgenden Beschreibung nicht anders angegeben ist, beziehen sich die Begriffe "durchführen", "berechnen", "rechnergestützt", "rechnen", "feststellen", "generieren", "konfigurieren", "rekonstruieren" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollte der Ausdruck "Computer" möglichst breit ausgelegt werden, um insbesondere alle elektronischen Geräte mit Datenverarbeitungseigenschaften abzudecken. Computer können somit beispielsweise Personal Computer, Server, speicherprogrammierbare Steuerungen (SPS), Handheld-Computer-Systeme, Pocket-PC-Geräte, IoT-Geräte Mobilfunkgeräte und andere Kommunikationsgeräte, die rechnergestützt Daten verarbeiten können, Prozessoren und andere elektronische Geräte zur Datenverarbeitung sein.

Unter "rechnergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt.

Unter einem Prozessor kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder einen DSP (Digitaler Signalprozessor, engl. Digital Signal Processor) oder einen Grafikprozessor GPU (Graphic Processing Unit) oder eine Tensorverarbeitungseinheit TPU (Tensor Processing Unit) oder einen Netzwerkprozessor NPU (Network Processing Unit) handeln. Auch kann unter einem Prozessor ein virtualisierter Prozessor, eine virtuelle Maschine oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens, der Komponente, der Module, oder anderer Aspekte und/oder Teilaspekte der Erfindung realisiert.

Unter einer "Speichereinheit" oder "Speichermodul" und dergleichen kann im Zusammenhang mit der Erfindung beispielsweise ein flüchtiger Speicher in Form von Arbeitsspeicher (engl. Random-Access Memory, RAM) oder ein dauerhafter Speicher wie eine Festplatte, eine Speicherkarte, ein Flash-Speichermodul, ein Batterie-gepuffertes SRAM-Speichermodul oder ein Datenträger verstanden werden.

Unter einem "Modul" kann im Zusammenhang mit der Erfindung beispielsweise ein Prozessor und/oder eine Speichereinheit zum Speichern von Programmbefehlen verstanden werden. Beispielsweise ist der Prozessor speziell dazu eingerichtet, die Programmbefehle derart auszuführen, damit der Prozessor Funktionen des entsprechenden Moduls ausführt oder um das erfindungsgemäße Verfahren oder einen Schritt des erfindungsgemäßen Verfahrens zu implementieren oder zu realisieren. Es kann beispielsweise ein Prozessor derart ausgebildet sein, dass dieser die Funktionen von mehreren Modulen realisiert.

Ein Modul kann beispielsweise auch ein Knoten des verteilten Datenbanksystems sein, der beispielsweise die spezifischen Funktionen/Merkmale eines entsprechenden Moduls realisiert. Die jeweiligen Module können beispielsweise auch als separate bzw. eigenständige Module ausgebildet sein. Hierzu können die entsprechenden Module beispielsweise weitere Elemente umfassen. Diese Elemente sind beispielsweise eine oder mehrere Schnittstellen (z. B. Datenbankschnittstellen, Kommunikationsschnittstellen - z. B. Netzwerkschnittstelle, WLAN-Schnittstelle) und/oder eine Evaluierungseinheit (z. B. ein Prozessor) und/oder eine Speichereinheit. Mittels der Schnittstellen können beispielsweise Daten ausgetauscht (z. B. empfangen, übermittelt, gesendet oder bereitgestellt werden). Mittels der Evaluierungseinheit können Daten beispielsweise rechnergestützt und/oder automatisiert verglichen, überprüft, verarbeitet, zugeordnet oder berechnet werden.

Mittels der Speichereinheit können Daten beispielsweise rechnergestützt und/oder automatisiert gespeichert, abgerufen oder bereitgestellt werden.

Unter "umfassen", insbesondere in Bezug auf Daten und/oder Informationen, kann im Zusammenhang mit der Erfindung beispielsweise ein (rechnergestütztes) Speichern einer entsprechenden Information bzw. eines entsprechenden Datums in einer Datenstruktur/Datensatz (die z. B. wiederum in einer Speichereinheit gespeichert ist) verstanden werden.

Unter "zuordnen", insbesondere in Bezug auf Daten und/oder Informationen, kann im Zusammenhang mit der Erfindung beispielsweise eine rechnergestützte Zuordnung von Daten und/oder Informationen verstanden werden. Beispielsweise wird einem ersten Datum hierzu mittels einer Speicheradresse oder eines eindeutigen Identifizierers (engl. unique identifier (UID) ein zweites Datum zugeordnet, in dem z. B. das erste Datum zusammen mit der Speicheradresse oder des eindeutigen Identifizierers des zweiten Datums zusammen in einem Datensatz gespeichert wird.

Unter "bereitstellen", insbesondere in Bezug auf Daten und/oder Informationen, kann im Zusammenhang mit der Erfindung beispielsweise ein rechnergestütztes Bereitstellen verstanden werden. Das Bereitstellen erfolgt beispielsweise über eine Schnittstelle (z. B. eine Datenbankschnittstelle, eine Netzwerkschnittstelle, eine Schnittstelle zu einer Speichereinheit). Über diese Schnittstelle können beispielsweise beim Bereitstellen entsprechende Daten und/oder Informationen übermittelt und/oder gesendet und/oder abgerufen und/oder empfangen werden.

Unter "bereitstellen" kann im Zusammenhang mit der Erfindung beispielsweise auch ein Laden oder ein Speichern, beispielsweise einer Transaktion mit entsprechenden Daten verstanden werden. Dies kann beispielsweise auf oder von einem Speichermodul erfolgen. Unter "Bereitstellen" kann beispielsweise auch ein Übertragen (oder ein Senden oder ein Übermitteln) von entsprechenden Daten von einem Knoten zu einem anderen Knoten der Blockkette oder des verteilten Datenbanksystems (bzw. deren Infrastruktur) oder der Netzwerk-Applikation verstanden werden.

Unter einer "Prüfsumme", beispielsweise eine Datenblockprüfsumme, eine Datenprüfsumme, eine Knotenprüfsumme, eine Transaktionsprüfsumme, eine Verkettungsprüfsumme oder dergleichen, kann im Zusammenhang mit der Erfindung beispielsweise eine kryptographische Prüfsumme oder kryptographischer Hash bzw. Hashwert verstanden werden, die insbesondere mittels einer kryptographischen Hashfunktion über einen Datensatz und/oder Daten und/oder eine oder mehrere der Transaktionen und/oder einem Teilbereich eines Datenblocks (z. B. der Block-Header eines Blocks einer Blockkette oder Datenblock-Header eines Datenblocks des verteilten Datenbanksystems (oder der Netzwerk-Applikation) oder nur einem Teil der Transaktionen eines Datenblocks) gebildet oder berechnet werden. Bei einer Prüfsumme kann es sich insbesondere um eine Prüfsumme/n oder Hashwert/e eines Hash-Baumes (z. B. Merkle Baum, Patricia-Baum) handeln. Weiterhin kann darunter insbesondere auch eine digitale Signatur oder ein kryptographischer Nachrichtenauthentisierungscode verstanden werden. Mittels der Prüfsummen kann beispielsweise auf unterschiedlichen Ebenen des Datenbanksystems ein kryptographischer Schutz/Manipulationsschutz für die Transaktionen und die darin gespeicherten Daten(sätze) realisiert werden. Ist beispielsweise eine hohe Sicherheit gefordert, werden beispielsweise die Prüfsummen auf Transaktionsebene erzeugt und überprüft. Ist eine weniger hohe Sicherheit gefordert, werden beispielsweise die Prüfsummen auf Blockebene (z. B. über den ganzen Datenblock oder nur über einen Teil des Datenblocks und/oder einen Teil der Transkationen) erzeugt und überprüft.

Unter einer "Datenblockprüfsumme" kann im Zusammenhang mit der Erfindung eine Prüfsumme verstanden werden, die beispielsweise über einen Teil oder alle Transaktionen eines Datenblocks berechnet wird. Ein Knoten kann dann beispielsweise die Integrität/Authentizität des entsprechenden Teils eines Datenblocks mittels der Datenblockprüfsumme prüfen/feststellen. Zusätzlich oder alternativ kann die Datenblockprüfsumme insbesondere auch über Transaktionen eines vorhergehenden Datenblocks/Vorgänger-Datenblocks des Datenblocks gebildet worden sein. Die Datenblockprüfsumme kann dabei insbesondere auch mittels eines Hash-Baumes, beispielsweise einem Merkle Baum [1] oder einem Patricia-Baum, realisiert werden, wobei die Datenblockprüfsumme insbesondere die Wurzel-Prüfsumme des Merkle-Baumes bzw. eines Patricia-Baumes bzw. eines binären Hashbaumes ist. Insbesondere werden Transaktionen mittels weiterer Prüfsummen aus dem Merkle-Baum bzw. Patricia-Baum abgesichert (z. B. unter Verwendung der Transaktionsprüfsummen), wobei insbesondere die weiteren Prüfsummen Blätter im Merkle-Baum bzw. Patricia-Baum sind. Die Datenblockprüfsumme kann damit beispielsweise die Transaktionen absichern, indem die Wurzel-Prüfsumme aus den weiteren Prüfsummen gebildet wird. Die Datenblockprüfsumme kann insbesondere für Transaktionen eines bestimmten Datenblocks der Datenblöcke berechnet werden. Insbesondere kann eine solche Datenblockprüfsumme in einen nachfolgenden Datenblock des bestimmten Datenblocks eingehen, um diesen nachfolgenden Datenblock beispielsweise mit seinen vorhergehenden Datenblöcken zu verketten und insbesondere damit eine Integrität des verteilten Datenbanksystems (oder der Netzwerk-Applikation) prüfbar zu machen. Hierdurch kann die Datenblockprüfsumme beispielsweise die Funktion der Verkettungsprüfsumme übernehmen oder in die Verkettungsprüfsumme eingehen. Der Header eines Datenblocks (z. B. eines neuen Datenblocks oder des Datenblocks, für den die Datenblockprüfsumme gebildet wurde) kann beispielsweise die Datenblockprüfsumme umfassen.

Unter "Transaktionsprüfsumme" kann im Zusammenhang mit der Erfindung eine Prüfsumme verstanden werden, die insbesondere über eine Transaktion eines Datenblocks gebildet wird. Zusätzlich kann beispielsweise eine Berechnung einer Datenblockprüfsumme für einen entsprechenden Datenblock beschleunigt werden, da hierfür beispielsweise bereits berechnete Transaktionsprüfsummen gleich als Blätter z. B. eines Merkle-Baumes verwendet werden können.

Unter einer "Verkettungsprüfsumme" kann im Zusammenhang mit der Erfindung eine Prüfsumme verstanden werden, die insbesondere einen jeweiligen Datenblock des verteilten Datenbanksystems (oder der Netzwerk-Applikation) den vorhergehenden Datenblock des verteilten Datenbanksystems (oder der Netzwerk-Applikation) angibt bzw. referenziert (in der Fachliteratur insbesondere häufig als "previous block hash" bezeichnet) [1]. Hierfür wird insbesondere für den entsprechenden vorhergehenden Datenblock eine entsprechende Verkettungsprüfsumme gebildet. Als Verkettungsprüfsumme kann beispielsweise eine Transaktionsprüfsumme oder die Datenblockprüfsumme eines Datenblocks (also ein vorhandener Datenblock des verteilten Datenbanksystems oder der Netzwerk-Applikation) verwendet werden, um einen neuen Datenblock mit einem (vorhandenen) Datenblock des verteilten Datenbanksystems (oder der Netzwerk-Applikation) zu verketten. Es ist beispielsweise aber auch möglich, dass eine Prüfsumme über einen Header des vorhergehenden Datenblocks oder über den gesamten vorhergehenden Datenblock gebildet wird und als Verkettungsprüfsumme verwendet wird. Dies kann beispielsweise auch für mehrere oder alle vorhergehenden Datenblöcke berechnet werden. Es ist beispielsweise auch realisierbar, dass über den Header eines Datenblocks und der Datenblockprüfsumme die Verkettungsprüfsumme gebildet wird. Ein jeweiliger Datenblock des verteilten Datenbanksystems (oder der Netzwerk-Applikation) umfasst jedoch vorzugsweise jeweils eine Verkettungsprüfsumme, die für einen vorhergehenden Datenblock, insbesondere noch bevorzugter den direkt vorhergehenden Datenblock, des jeweiligen Datenblockes berechnet wurde bzw. sich auf diesen beziehen. Es ist beispielsweise auch möglich, dass eine entsprechende Verkettungsprüfsumme auch nur über einen Teil des entsprechenden Datenblocks (z. B. vorhergehenden Datenblock) gebildet wird. Hierdurch kann beispielsweise ein Datenblock realisiert werden, der einen integritätsgeschützten Teil und einen ungeschützten Teil umfasst. Damit ließe sich beispielsweise ein Datenblock realisieren, dessen integritätsgeschützter Teil unveränderlich ist und dessen ungeschützter Teil auch noch später verändert werden kann (um z. B. im ungeschützten Teil noch personenbezogene Daten zu speichern). Unter integritätsgeschützt ist dabei insbesondere zu verstehen, dass eine Veränderung von integritätsgeschützten Daten mittels einer Prüfsumme feststellbar ist.

Die Daten, die beispielsweise in einer Transaktion eines Datenblocks gespeichert werden, können insbesondere auf unterschiedliche Weise bereitgestellt werden. Anstelle der Daten, z. B. Nutzerdaten wie Messdaten oder Daten/Eigentumsverhältnisse zu Assets, kann beispielsweise eine Transaktion eines Datenblocks nur die Prüfsumme für diese Daten umfassen. Die entsprechende Prüfsumme kann dabei auf unterschiedliche Weise realisiert werden. Dies kann z. B. eine entsprechende Datenblockprüfsumme eines Datenblocks (mit den entsprechenden Daten) einer anderen Datenbank oder des verteilten Datenbanksystems (oder der Netzwerk-Applikation) sein, eine Transaktionsprüfsumme eines Datenblocks mit den entsprechenden Daten (des verteilten Datenbanksystems oder der Netzwerk-Applikation oder einer anderen Datenbank) oder eine Datenprüfsumme, die über die Daten gebildet wurde.

Zusätzlich kann die entsprechende Transaktion noch einen Verweis oder eine Angabe zu einem Speicherort (z. B. eine Adresse eines Fileservers und Angaben, wo die entsprechenden Daten auf dem Fileserver zu finden sind; oder eine Adresse einer anderen verteilten Datenbank oder einer anderen Netzwerk-Applikation, welche die Daten umfasst) umfassen. Die entsprechenden Daten könnten dann beispielsweise auch in einer weiteren Transaktion eines weiteren Datenblocks des verteilten Datenbanksystems oder der Netzwerk-Applikation bereitgestellt werden (z. B. wenn die entsprechenden Daten und die zugehörigen Prüfsummen in unterschiedlichen Datenblöcken umfasst sind). Es ist beispielsweise aber auch denkbar, dass diese Daten über einen anderen Kommunikationskanal (z. B. über eine andere Datenbank und/oder einen kryptographisch gesicherten Kommunikationskanal) bereitgestellt werden.

Auch kann beispielsweise zusätzlich zu der Prüfsumme ein Zusatzdatensatz (z. B. ein Verweis oder eine Angabe zu einem Speicherort) in den entsprechenden Transaktionen abgelegt sein, der insbesondere einen Speicherort angibt, wo die Daten abgerufen werden können. Das ist insbesondere dahingehend vorteilhaft, um eine Datengröße der Blockkette oder des verteilten Datenbanksystems oder der Netzwerk-Applikation möglichst gering zu halten.

Unter "sicherheitsgeschützt" kann im Zusammenhang mit der Erfindung beispielsweise ein Schutz verstanden werden, der insbesondere durch ein kryptographisches Verfahren realisiert wird. Beispielsweise kann dies durch eine Nutzung des verteilten Datenbanksystems (oder der Netzwerk-Applikation) für das Bereitstellen oder Übertragen oder Senden von entsprechenden Daten/Transaktionen realisiert werden. Dies wird vorzugsweise durch eine Kombination der verschiedenen (kryptographischen) Prüfsummen erreicht, indem diese insbesondere synergetisch zusammenwirken, um beispielsweise die Sicherheit bzw. die kryptographische Sicherheit für die Daten der Transaktionen zu verbessern. Mit anderen Worten kann insbesondere unter "sicherheitsgeschützt" im Zusammenhang mit der Erfindung auch "kryptographisch geschützt" und/oder "manipulationsgeschützt" verstanden werden, wobei "manipulationsgeschützt" auch als "integritätsgeschützt" bezeichnet werden kann.

Unter "Verketten der/von Datenblöcken eines verteilten Datenbanksystems oder einer Netzwerk-Applikation" kann im Zusammenhang mit der Erfindung beispielsweise verstanden werden, dass Datenblöcke jeweils eine Information (z. B. Verkettungsprüfsumme) umfassen, die auf einen anderen Datenblock oder mehrere andere Datenblöcke des verteilten Datenbanksystems (oder der Netzwerk-Applikation) verweisen bzw. diese referenzieren [1] [4] [5] .

Unter "Einfügen in das verteilte Datenbanksystem oder die Netzwerk-Applikation" und dergleichen kann im Zusammenhang mit der Erfindung beispielsweise verstanden werden, dass insbesondere eine Transaktion bzw. die Transaktionen oder ein Datenblock mit seinen Transaktionen an einen oder mehrere Knoten eines verteilten Datenbanksystems oder einer Netzwerk-Applikation übermittelt wird. Werden diese Transaktionen beispielsweise erfolgreich validiert (z. B. durch den/die Knoten), werden diese Transaktionen insbesondere als neuer Datenblock mit mindestens einem vorhandenen Datenblock des verteilten Datenbanksystems oder der Netzwerk-Applikation verkettet [1][4][5]. Hierzu werden die entsprechenden Transaktionen beispielsweise in einem neuen Datenblock gespeichert. Insbesondere kann dieses Validieren und/oder Verketten durch einen vertrauenswürdigen Knoten (z. B. einen Mining Node, ein Blockketten-Orakel oder eine Blockketten-Plattform) erfolgen. Insbesondere kann dabei unter einer Blockketten-Plattform eine Blockkette als Dienst (engl. Blockchain as a Service) verstanden werden, wie dies insbesondere durch Microsoft oder IBM vorgeschlagen wird. Insbesondere können ein vertrauenswürdiger Knoten und/oder ein Knoten jeweils eine Knoten-Prüfsumme (z. B. eine digitale Signatur) in einem Datenblock hinterlegen (z. B. in denen von ihnen validierten und erzeugten Datenblock, der dann verkettet wird), um insbesondere eine Identifizierbarkeit des Erstellers des Datenblockes zu ermöglichen und/oder eine Identifizierbarkeit des Knotens zu ermöglichen. Dabei gibt diese Knoten-Prüfsumme an, welcher Knoten beispielsweise den entsprechenden Datenblock mit mindestens einem anderen Datenblock des verteilten Datenbanksystems (oder der Netzwerk-Applikation) verkettet hat.

Unter "Transaktion" bzw. "Transaktionen" können im Zusammenhang mit der Erfindung beispielsweise ein Smart-Contract [4] [5], eine Datenstruktur oder ein Transaktionsdatensatz verstanden werden, der insbesondere jeweils eine der Transaktionen oder mehrere Transkationen umfasst. Beispielsweise kann auch eine entsprechende Transaktion einen Smart-Contract umfassen. Unter "Transaktion" bzw. "Transaktionen" können im Zusammenhang mit der Erfindung beispielsweise auch die Daten einer Transaktion eines Datenblocks einer Bockkette (engl. Blockchain) verstanden werden. Eine Transaktion kann insbesondere einen Programmcode umfassen, der beispielsweise einen Smart Contract realisiert. Beispielsweise können im Zusammenhang mit der Erfindung unter Transaktion auch eine Steuertransaktionen und/oder eine Bestätigungstransaktion mit einer Bestätigungsnachricht und/oder eine Ausführungsbestätigungstransaktion mit einer Ausführungsbestätigungsnachricht verstanden werden. Eine Ausführungsbestätigungsnachricht kann beispielsweise eine Bestätigung für eine Ausführung der Steuerbefehle der Steuertransaktion durch eines der Geräte umfassen, wenn ein entsprechendes Gerät der Geräte die Steuerbefehle der Steuertransaktion erfolgreich ausgeführt hat. Hierzu kann die Ausführungsbestätigungsnachricht beispielsweise eine von dem entsprechenden Gerät erzeugte Prüfsumme (z. B. eine Transaktionsprüfsumme) über die ausgeführten Steuerbefehle umfassen und/oder eine Bestätigung der Ausführung umfassen, die z. B. von der Prüfsumme ebenfalls geschützt ist. Eine Ausführungsbestätigungsnachricht kann beispielsweise auch in dem verteilten Datenbanksystem oder der Netzwerkapplikation gespeichert werden, wenn das Gerät die Steuerbefehle teilweise ausführt und/oder die Ausführung der Steuerbefehle unterbrochen wird. Dies kann z. B. der Fall sein, wenn während der Ausführung der Steuerbefehle ein Defekt an dem Gerät aufgetreten ist, der die Ausführung der Steuerbefehle nicht mehr erlaubt (z. B. trat ein Defekt an einem Aktor oder Werkzeug auf). Beispielsweise kann ein anderes Gerät, das beispielsweise die Ausführungsanforderungen für die verbleibenden unausgeführten Steuerbefehle erfüllt, dann anhand der Ausführungsbestätigungsnachricht diese unausgeführten Steuerbefehle der entsprechenden Steuertransaktion ausführen. Entsprechend kann die Ausführungsbestätigungsnachricht beispielsweise den Grad der Ausführung bzw. eine Angabe über den ausgeführten Teil der Steuerbefehle umfassen. Alternativ oder zusätzlich kann eine Ausführungsbestätigungsnachricht die Steuerbefehle angeben, die für eine erfolgreiche Ausführung der Steuerbefehle einer entsprechenden Steuertransaktion noch ausgeführt werden müssen. Entsprechend kann beispielsweise eine Ausführungsbestätigungsnachricht einen Datensatz umfassen, der angibt welche der Steuerbefehle noch auszuführen sind bzw. der angibt welche der Steuerbefehle für die erfolgreiche Ausführung der Steuerbefehle einer entsprechenden Steuertransaktion fehlen. Hierdurch wird beispielsweise ermöglicht, dass eine Weiterverarbeitung der Steuerbefehle erfolgen kann, selbst wenn die Ausführung der Steuerbefehle bei einem Gerät unterbrochen wurde. Entsprechend kann beispielsweise in den Ausführungsanforderungen gefordert sein, dass mehr als ein Gerät (z. B. zwei oder drei Geräte oder mehr Geräte) die Ausführungsanforderungen erfüllt, damit eine Ausführung der Steuerbefehle auch garantiert ist, selbst wenn z. B. ein Gerät während der Ausführung der Steuerbefehle einer entsprechenden Steuertransaktion ausfällt.

Alternativ kann eine Transaktion beispielsweise eine Datenstruktur sein, die Daten speichert (z. B. die Steuerbefehle). Eine Transaktion kann beispielsweise auch als Nachricht (also eine Kommunikationsnachricht, welche Daten speichert) bezeichnet werden bzw. eine Nachricht sein, die z. B. entsprechende Daten (z. B. Steuerbefehle) speichert. Mit der Erfindung können somit entsprechende Transaktionen oder Nachrichten ausgetauscht werden. Transaktionen können dabei z. B. die Steuerbefehle und/oder Vertragsdaten und/oder andere Daten wie Videodaten, Nutzerdaten, Messdaten etc. umfassen.

Insbesondere ist unter "Speichern von Transaktionen in Datenblöcken", "Speichern von Transaktionen" und dergleichen ein direktes Speichern oder indirektes Speichern zu verstehen. Unter einem direkten Speichern kann dabei beispielsweise verstanden werden, dass der entsprechende Datenblock (des verteilten Datenbanksystems oder der Netzwerk-Applikation) oder die entsprechende Transaktion des verteilten Datenbanksystems oder der Netzwerk-Applikation) die jeweiligen Daten umfasst. Unter einem indirekten Speichern kann dabei beispielsweise verstanden werden, dass der entsprechende Datenblock oder die entsprechende Transaktion eine Prüfsumme und optional einen Zusatzdatensatz (z. B. einen Verweis oder eine Angabe zu einem Speicherort) für entsprechende Daten umfasst und die entsprechenden Daten somit nicht direkt in dem Datenblock (oder der Transaktion) gespeichert sind (also stattdessen nur eine Prüfsumme für diese Daten). Insbesondere können beim Speichern von Transaktionen in Datenblöcken diese Prüfsummen beispielsweise validiert werden, so wie dies beispielsweise unter "Einfügen in das verteilte Datenbanksystem oder die Netzwerk-Applikation" erläutert ist.

Unter einem "Programmcode" (z. B. ein Smart-Contract oder Chain-Code) kann im Zusammenhang mit der Erfindung beispielsweise ein Programmbefehl oder mehrere Programmbefehle verstanden werden, die insbesondere in einer oder mehreren Transaktionen gespeichert sind. Der Programmcode ist insbesondere ausführbar und wird beispielsweise durch das verteilte Datenbanksystem oder die Netzwerk-Applikation ausgeführt. Dies kann beispielsweise mittels einer Ausführungsumgebung (z. B. einer virtuellen Maschine) realisiert werden, wobei die Ausführungsumgebung bzw. der Programmcode vorzugsweise Turing-vollständig sind. Der Programmcode wird vorzugsweise durch die Infrastruktur des verteilten Datenbanksystems oder der Netzwerk-Applikation ausgeführt [4][5]. Dabei wird beispielsweise eine virtuelle Maschine durch die Infrastruktur des verteilten Datenbanksystems (oder der Netzwerk-Applikation) realisiert.

Unter einem "Smart Contract" kann im Zusammenhang mit der Erfindung beispielsweise ein ausführbarer Programmcode verstanden werden [4][5] (siehe insbesondere Definition "Programmcode") . Der Smart Contract ist vorzugsweise in einer Transaktion eines verteilten Datenbanksystems oder der Netzwerk-Applikation (z. B. eine Blockkette) gespeichert, beispielsweise in einem Datenblock des verteilten Datenbanksystems (oder der Netzwerk-Applikation). Beispielsweise kann der Smart Contract auf die gleiche Weise ausgeführt werden, wie dies bei der Definition von "Programmcode", insbesondere im Zusammenhang mit der Erfindung, erläutert ist.

Unter "Smart-Contract-Prozess" kann im Zusammenhang mit der Erfindung insbesondere ein Ausführen eines Programmcodes (z. B. der Steuerbefehle) in einem Prozess durch das verteilte Datenbanksystem oder durch die Netzwerk-Applikation verstanden werden, wobei beispielsweise die entsprechende Infrastruktur des verteilten Datenbanksystems oder der Netzwerk-Applikation den Programmcode ausführt.

Unter "Proof-of-Work-Nachweis" kann im Zusammenhang mit der Erfindung beispielsweise ein Lösen einer rechenintensiven Aufgabe verstanden werden, die insbesondere abhängig vom Datenblock-Inhalt oder Inhalt einer bestimmten Transaktion zu lösen ist [1][4][5]. Eine solche rechenintensive Aufgabe wird beispielsweise auch als kryptographisches Puzzle bezeichnet.

Unter einer "Netzwerk-Applikation", kann im Zusammenhang mit der Erfindung beispielsweise eine dezentral verteilte Datenbank, ein verteiltes Datenbanksystem, eine verteilte Datenbank, eine Peer-to-Peer Applikation, ein verteiltes Speicherverwaltungssystem, eine Blockkette (engl. Blockchain), ein distributed Ledger, ein verteiltes Speichersystem, ein distributed ledger technology (DLT) based system (DLTS), ein revisionssicheres Datenbanksystem, eine Cloud, ein Cloud-Service, eine Blockkette in einer Cloud oder eine Peer-to-Peer Datenbank verstanden werden. Beispielsweise kann eine Netzwerk-Applikation (oder auch als Netzwerkapplikation bezeichnet) ein verteiltes Datenbanksystem sein, das z. B. mittels einer Blockkette oder einem distributed ledger realisiert ist. Auch können beispielsweise unterschiedliche Implementierungen einer Blockkette oder eines DLTS verwendet werden, wie z. B. eine Blockkette oder ein DLTS, die mittels eines Directed Acylic Graph (DAG), eines kryptographischen Puzzles, einem Hashgraph oder einer Kombination aus den genannten Implementierungsvarianten [6][7] umgesetzt ist. Auch können beispielsweise unterschiedliche Konsensusverfahren (engl. consensus algorithms) implementiert werden. Dies kann beispielsweise ein Konsensusverfahren mittels eines kryptographischen Puzzles, Gossip about Gossip, Virtual Voting oder eine Kombination der genannten Verfahren sein (z. B. Gossip about Gossip kombiniert mit Virtual Voting) [6][7]. Wird beispielsweise eine Blockkette verwendet, so kann diese insbesondere mittels einer Bitcoin-basierten Realisierung oder einer Ethereum-basierten Realisierung umgesetzt werden [1][4][5]. Unter einem "verteilten Datenbanksystem" oder einer "Netzwerk-Applikation" kann beispielsweise auch ein verteiltes Datenbanksystem oder eine Netzwerk-Applikation verstanden werden, von dem/der zumindest ein Teil seiner Knoten und/oder Geräte und/oder Infrastruktur durch eine Cloud realisiert sind. Beispielsweise sind die entsprechenden Komponenten als Knoten/Geräte in der Cloud (z. B. als virtueller Knoten in einer virtuellen Maschine) realisiert. Dies kann beispielsweise mittels VM-Ware, Amazon Web Services oder Microsoft Azure erfolgen. Aufgrund der hohen Flexibilität der erläuterten Implementierungsvarianten, können insbesondere auch Teilaspekte der genannten Implementierungsvarianten miteinander kombiniert werden, indem z. B. ein Hashgraph als Blockkette verwendet wird, wobei die Blockkette selbst z. B. auch blocklos sein kann.

Wird beispielsweise ein Directed Acylic Graph (DAG) verwendet (z. B. IOTA oder Tangle), sind insbesondere Transaktionen oder Blöcke oder Knoten des Graphen über gerichtete Kanten miteinander verbunden. Azyklisch bedeutet dabei insbesondere, dass es keine gerichteten Schleifen im Graphen gibt.

Bei dem verteilten Datenbanksystem oder bei der Netzwerk-Applikation kann es sich beispielsweise um ein öffentliches verteiltes Datenbanksystem oder eine ein öffentliche Netzwerk-Applikation (z. B. eine öffentliche Blockkette) oder ein geschlossenes (oder privates) verteiltes Datenbanksystem oder eine geschlossene Netzwerk-Applikation (z. B. eine private Blockkette) handeln.

Handelt es sich beispielsweise um ein öffentliches verteiltes Datenbanksystem oder eine öffentliche Netzwerk-Applikation, bedeutet dies, dass neue Knoten und/oder Geräte ohne Berechtigungsnachweise oder ohne Authentifizierung oder ohne Anmeldeinformationen oder ohne Credentials dem verteilten Datenbanksystem oder der Netzwerk-Applikation beitreten können bzw. von diesem akzeptiert werden. Insbesondere können in einem solchen Fall die Betreiber der Knoten und/oder Geräte anonym bleiben.

Handelt es sich bei dem verteilten Datenbanksystem oder der Netzwerk-Applikation beispielsweise um ein geschlossenes verteiltes Datenbanksystem, benötigen neue Knoten und/oder Geräte beispielsweise einen gültigen Berechtigungsnachweis und/oder gültige Authentifizierungsinformationen und/oder gültige Credentials und/oder gültige Anmeldeinformationen, um dem verteilten Datenbanksystem oder der Netzwerk-Applikation beitreten zu können bzw. von diesem akzeptiert zu werden.

Bei einem verteilten Datenbanksystem oder bei der Netzwerk-Applikation kann es sich beispielsweise auch um ein verteiltes Kommunikationssystem zum Datenaustausch handeln. Dies kann beispielsweise ein Netzwerk oder ein Peer-to-Peer Netzwerk sein.

Bei einem/dem verteilten Datenbanksystem kann es sich beispielsweise auch um ein dezentrales verteiltes Datenbanksystem und/oder ein dezentrales verteiltes Kommunikationssystem handeln.

Bei einer "Netzwerk-Applikation" kann es sich beispielsweise auch um eine Netzwerk-Applikationsinfrastruktur handeln oder die Netzwerk-Applikation umfasst eine entsprechende Netzwerk-Applikationsinfrastruktur. Diese Infrastruktur kann beispielsweise Knoten und/oder Kommunikationsnetze und/oder Datenschnittstelle und/oder weitere Komponenten umfassen, um die Netzwerk-Applikation zu realisieren oder auszuführen. Bei der Netzwerk-Applikation kann es sich z. B. um eine verteilte Netzwerk-Applikation (z. B. eine verteilte Peer-to-Peer Applikation oder ein verteiltes Datenbanksystem) handeln, die beispielsweise auf mehreren Knoten der Netzwerk-Applikationsinfrastruktur ausgeführt wird.

Unter "Datenblock", der insbesondere je nach Kontext und Realisierung auch als "Glied" oder "Block" bezeichnet sein kann, kann im Zusammenhang mit der Erfindung beispielsweise ein Datenblock eines verteilten Datenbanksystems oder einer Netzwerk-Applikation (z. B. eine Blockkette oder eine Peer-to-Peer Datenbank) verstanden werden, die insbesondere als Datenstruktur realisiert ist und vorzugsweise jeweils eine der Transaktionen oder mehrere der Transaktionen umfasst. Bei einer Implementierung kann beispielsweise die Datenbank (oder das Datenbanksystem) ein DLT basiertes System (DLTS) oder eine Blockkette sein und ein Datenblock ein Block der Blockkette oder des DLTS. Ein Datenblock kann beispielsweise Angaben zur Größe (Datengröße in Byte) des Datenblocks, einen Datenblock-Header (engl. Blockheader), einen Transaktionszähler und eine oder mehrere Transaktionen umfassen [1]. Der Datenblock-Header kann beispielsweise eine Version, eine Verkettungsprüfsumme, eine Datenblockprüfsumme, einen Zeitstempel, einen Proof-of-Work Nachweis und eine Nonce (Einmalwert, Zufallswert oder Zähler, der für den Proof-of-Work Nachweis verwendet wird) umfassen [1][4][5]. Bei einem Datenblock kann es sich beispielsweise auch nur um einen bestimmten Speicherbereich oder Adressbereich der Gesamtdaten handeln, die in dem verteilten Datenbanksystem oder der Netzwerk-Applikation gespeichert sind. Damit lassen sich beispielsweise blocklose (engl. blockless) verteilte Datenbanksysteme oder Netzwerk-Applikationen, wie z. B. die IoT Chain (ITC), IOTA, und Byteball, realisieren. Hierbei werden insbesondere die Funktionalitäten der Blöcke einer Blockkette und der Transaktionen miteinander derart kombiniert, dass z. B. die Transaktionen selbst die Sequenz oder Kette von Transaktionen (des verteilten Datenbanksystems oder der Netzwerk-Applikation) absichern (also insbesondere sicherheitsgeschützt gespeichert werden). Hierzu können beispielsweise mit einer Verkettungsprüfsumme die Transaktionen selbst miteinander verkettet werden, indem vorzugsweise eine separate Prüfsumme oder die Transaktionsprüfsumme einer oder mehrerer Transaktionen als Verkettungsprüfsumme dient, die beim Speichern einer neuen Transaktion in dem verteilten Datenbanksystem oder der Netzwerk-Applikation in der entsprechenden neuen Transaktion mit gespeichert wird. In einer solchen Ausführungsform kann ein Datenblock beispielsweise auch eine oder mehrere Transaktionen umfassen, wobei im einfachsten Fall beispielsweise ein Datenblock einer Transaktion entspricht. Beispielsweise können zusätzlich zu einer Prüfsumme über die Transaktionen auch eine Prüfsumme über den "State", d.h. die Zustände der Smart-Contracts und/oder der Konten und/oder über die Rückgabewerte der Transaktionen (engl. Transaction Receipts) z. B. in die Transaktion und/oder den Datenblock eingefügt werden.

Unter "Nonce" kann im Zusammenhang mit der Erfindung beispielsweise eine kryptographische Nonce verstanden werden (Abkürzung für: "used only once"[2] oder "number used once"[3]). Insbesondere bezeichnet eine Nonce einzelne Zahlen- oder eine Buchstabenkombination, die vorzugsweise ein einziges Mal in dem jeweiligen Kontext (z. B. Transaktion, Datenübertragung) verwendet wird.

Unter "vorhergehende Datenblöcke eines (bestimmten) Datenblockes des verteilten Datenbanksystems oder der Netzwerk-Applikation" kann im Zusammenhang mit der Erfindung beispielsweise der Datenblock des verteilten Datenbanksystems oder der Netzwerk-Applikation verstanden werden, der insbesondere einem (bestimmten) Datenblock direkt vorhergeht. Alternativ können unter "vorhergehender Datenblöcke eines (bestimmten) Datenblockes des verteilten Datenbanksystems oder der Netzwerk-Applikation" insbesondere auch alle Datenblöcke des verteilten Datenbanksystems oder der Netzwerk-Applikation verstanden werden, die dem bestimmten Datenblock vorhergehen. Hierdurch kann beispielsweise die Verkettungsprüfsumme oder die Transaktionsprüfsumme insbesondere nur über den dem bestimmten Datenblock direkt vorhergehenden Datenblock (bzw. deren Transaktionen) oder über alle dem ersten Datenblock vorhergehenden Datenblöcke (bzw. deren Transaktionen) gebildet werden.

Unter einem "Blockketten-Knoten", "Knoten", "Knoten eines verteilten Datenbanksystems der der Netzwerk-Applikation" und dergleichen, können im Zusammenhang mit der Erfindung beispielsweise Geräte (z. B. Feldgeräte, Mobiltelefone), Rechner, Smart-Phones, Clients oder Teilnehmer verstanden werden, die Operationen (mit) dem verteilten Datenbanksystem oder der Netzwerk-Applikation (z. B. eine Blockkette) durchführen [1][4][5]. Solche Knoten können beispielsweise Transaktionen eines verteilten Datenbanksystems oder einer Netzwerk-Applikation bzw. deren Datenblöcke ausführen oder neue Datenblöcke mit neuen Transaktionen in das verteilte Datenbanksystem oder die Netzwerk-Applikation mittels neuer Datenblöcke einfügen bzw. verketten. Insbesondere kann dieses Validieren und/oder Verketten durch einen vertrauenswürdigen Knoten (z. B. einem Mining Node) oder ausschließlich durch vertrauenswürdige Knoten erfolgen. Bei einem vertrauenswürdigen Knoten handelt es sich beispielsweise um einen Knoten, der über zusätzliche Sicherheitsmaßnahmen verfügt (z. B. Firewalls, Zugangsbeschränkungen zum Knoten oder ähnliches), um eine Manipulation des Knotens zu verhindern. Alternativ oder zusätzlich kann beispielsweise ein vertrauenswürdiger Knoten beim Verketten eines neuen Datenblocks mit dem verteilten Datenbanksystem oder der Netzwerk-Applikation, eine Knotenprüfsumme (z. B. eine digitale Signatur oder ein Zertifikat) in dem neuen Datenblock speichern. Beider Knotenprüfsumme kann es sich dabei beispielsweise um eine von einem entsprechenden Knoten signierte Prüfsumme z. B. eines Datenblocks oder einer Transaktion handeln. Damit kann insbesondere ein Nachweis bereitgestellt werden, der angibt, dass der entsprechende Datenblock von einem bestimmten Knoten eingefügt wurde bzw. seine Herkunft angibt. Bei den Geräten (z. B. dem entsprechenden Gerät) handelt es sich beispielsweise um Geräte eines technischen Systems und/oder industriellen Anlage und/oder eines Automatisierungsnetzes und/oder einer Fertigungsanlage, die insbesondere auch ein Knoten des verteilten Datenbanksystems oder der Netzwerk-Applikation sind. Dabei können die Geräte beispielsweise Feldgeräte sein oder Geräte im Internet der Dinge sein, die insbesondere auch ein Knoten des verteilten Datenbanksystems oder der Netzwerk-Applikation sind. Knoten können beispielsweise auch zumindest einen Prozessor umfassen, um z. B. ihre computerimplementierte Funktionalität auszuführen.

Unter einem "Blockketten-Orakel" und dergleichen können im Zusammenhang mit der Erfindung beispielsweise Knoten, Geräte oder Rechner verstanden werden, die z. B. über ein Sicherheitsmodul verfügen, das beispielsweise über Software-Schutzmechanismen (z. B. kryptographische Verfahren), mechanische Schutzeinrichtungen (z. B. ein abschließbares Gehäuse) oder elektrische Schutzeinrichtungen verfügt (z. B. TamperSchutz oder ein Schutzsystem, das die Daten des Sicherheitsmoduls bei einer unzulässigen Nutzung/Behandlung des Bloccketten-Orakels löscht). Das Sicherheitsmodul kann dabei beispielsweise kryptographische Schlüssel umfassen, die z. B. für die Signatur der Transaktion und/oder für die Berechnung der Prüfsummen (z. B. Transaktionsprüfsummen oder Knotenprüfsummen) notwendig sind. Ein Blockketten-Orakel kann beispielsweise eine Information der physikalischen Welt über einen Sensor erfassen und als Datensatz an eine Netzwerkapplikation übermitteln. Weiterhin kann ein Blockketten-Orakel einen Datensatz aus einer Datenbank auslesen und an eine Netzwerkapplikation übermitteln.

Unter einem "Rechner" oder einem "Gerät" kann im Zusammenhang mit der Erfindung beispielsweise ein Computer(system), ein Client, ein Smart-Phone, ein Server, die jeweils außerhalb der Blockkette angeordnet sind bzw. kein Teilnehmer des verteilten Datenbanksystems oder der Netzwerk-Applikation (z. B. der Blockkette) sind (also keine Operationen mit dem verteilten Datenbanksystem oder der Netzwerk-Applikation durchführen oder diese nur abfragen, ohne jedoch Transaktionen durchzuführen, Datenblöcke einzufügen oder Proof-of-Work-Nachweise zu berechnen), verstanden werden. Alternativ kann insbesondere auch unter einem Rechner ein Knoten des verteilten Datenbanksystems oder der Netzwerk-Applikation verstanden werden. Mit anderen Worten kann insbesondere unter einem Gerät ein Knoten des verteilten Datenbanksystems oder der Netzwerk-Applikation verstanden werden oder auch ein Gerät außerhalb der Blockkette bzw. des verteilten Datenbanksystems oder der Netzwerk-Applikation verstanden werden. Ein Gerät außerhalb des verteilten Datenbanksystems oder der Netzwerk-Applikation kann beispielsweise auf die Daten (z. B. Transaktionen oder Steuertransaktionen) des verteilten Datenbanksystems oder der Netzwerk-Applikation zugreifen und/oder von Knoten (z. B. mittels Smart-Contracts und/oder Blockketten-Orakel) angesteuert werden. Wird beispielsweise eine Ansteuerung bzw. Steuerung eines Gerätes (z. B. ein als Knoten ausgebildetes Gerät oder ein Gerät außerhalb des verteilten Datenbanksystems oder der Netzwerk-Applikation) durch einen Knoten realisiert, kann dies z. B. mittels eines Smart-Contracts erfolgen, der insbesondere in einer Transaktion des verteilten Datenbanksystems oder der Netzwerk-Applikation gespeichert ist. Ein Rechner oder ein Gerät kann beispielsweise auch ein Teil der Infrastruktur sein, die z. B. die Netzwerk-Applikation oder das verteilte Datenbanksystem ausführt, realisiert oder umfasst.

Unter "Steuerbefehle" oder "Steuertransaktionen" können im Zusammenhang mit der Erfindung beispielsweise ein Smart-Contract [4][5] oder ausführbarer Programmcode verstanden werden, der insbesondere durch die Netzwerkapplikation oder das verteilte Datenbanksystem oder durch entsprechende Geräte ausgeführt wird, wobei beispielsweise das verteilte Datenbanksystem bzw. dessen Knoten und Infrastruktur die entsprechenden Steuerbefehle abarbeitet bzw. umsetzt. Insbesondere ergeben mehrere Steuerbefehle oder Steuertransaktionen aus einem oder mehreren Datenblöcken eine Befehlsfolge. Mittels der Steuerbefehle werden insbesondere eine Fertigungsanlage mit den zugehörigen Fertigungsmaschinen (z. B. Geräte) gesteuert, die Geräte eines Automatisierungsnetzes gesteuert oder die Geräte eines Energieversorgungsnetzes gesteuert oder Geräte im Internet der Dinge gesteuert. Insbesondere sind in den Steuerbefehlen oder Steuertransaktionen (also auch in den Befehlsfolgen) die Fertigungsanweisungen oder Fertigungsschritte für ein Produkt und dessen Herstellung kodiert. Mit den Steuerbefehlen oder Steuertransaktionen werden beispielsweise Geräte gesteuert, indem beispielsweise ein Gerät die entsprechenden Steuerbefehle ausführt. Bei den Geräten (z. B. dem entsprechenden Gerät) handelt es sich beispielsweise um Geräte eines technischen Systems und/oder industriellen Anlage und/oder eines Automatisierungsnetzes und/oder einer Fertigungsanlage und/oder Geräte im Internet der Dinge, die insbesondere auch ein Knoten des verteilten Datenbanksystems sind. Dabei können die Geräte beispielsweise Feldgeräte sein, die insbesondere auch ein Knoten des verteilten Datenbanksystems sind. Die Geräte können beispielsweise auch Bankautomaten sein, wobei die Steuerbefehle eine Geldauszahlung veranlassen. Beispielsweise können die Steuerbefehle aus einer Befehlsfolge abgeleitet werden bzw. aus diesen bestimmt werden. Beispielsweise kann eine Steuertransaktion einen oder mehrere Steuerbefehle umfassen. Beispielsweise kodieren die Steuerbefehle mechanische Bewegung und/oder andere physikalische Größen (z. B. Druck oder Temperatur), die von einem entsprechenden Gerät/Knoten (z. B. durch einen entsprechenden Aktor) in die entsprechende mechanische Bewegung und/oder die entsprechende andere physikalische Größen umgesetzt werden. Mit den Steuerbefehlen werden dann beispielsweise Aktoren der Geräte und/oder Knoten gesteuert. Entsprechend umfasst ein entsprechendes Gerät/Knoten beispielsweise einen Aktor. Ist ein Gerät/Knoten beispielsweise ein Roboter so würde ein Aktor auch als Effektor bezeichnet werden. Bei einem Gerät kann es sich beispielsweise auch um ein mechatronisches Gerät oder System handeln, wobei ein mechatronisches Gerät/System beispielsweise ein Aktor und/oder ein lineartechnisches Gerät ist. Ein lineartechnisches Gerät ist beispielsweise ein Gerät zur Ausführung translativer Bewegungen. Bei einem entsprechenden Gerät kann es sich beispielsweise auch um ein Antriebssystem handeln. Mittels der Steuerbefehle und der Geräte und/oder Knoten kann beispielsweise auch ein Regelkreis geregelt und/oder gesteuert werden, indem beispielsweise die Ausführungsbestätigungsnachrichten für ausgeführte Steuerbefehle durch die Vorrichtung oder durch die Netzwerkapplikation ausgewertet werden und entsprechende Steuerbefehle als Reaktion auf die Ausführungsbestätigungsnachrichten erzeugt werden. Für diese neuen Steuerbefehle werden dann beispielsweise wieder entsprechende Ausführungsanforderungen bestimmt oder abgerufen und diese werden dann beispielsweise wieder Steuertransaktionen zugeordnet, damit diese beispielsweise - wie in der Erfindung beschrieben - von den entsprechenden Geräten für die Ausführung der Steuerbefehle berücksichtigt werden. Bei den Steuerbefehlen kann es sich beispielsweise auch um Steuerbefehle zum Steuern von kryptographischen Geräten und/oder Verfahren handeln (z. B. eine Nutzerauthentisierung oder Nutzerauthentifizierung).

Unter Steuerbefehlen können beispielsweise auch Befehlsfolgen oder auch Transaktionen aus einer Datenbank bzw. eines Datenbanksystems verstanden werden, die durch Geräte oder Knoten des verteilten Datenbanksystems ausgeführt werden sollen. Bei dem Datenbanksystem kann es sich beispielsweise um das verteilte Datenbanksystem handeln, wenn es z. B. Transaktionen gibt, denen noch keine Ausführungsanforderungen zugewiesen bzw. zugeordnet wurden. Alternativ oder zusätzlich kann das Datenbanksystem eine andere Datenbank sein, z. B. eine konventionelle hierarchische Datenbank, von der die entsprechenden Transaktionen abgerufen werden können. Unter Steuerbefehle können beispielsweise auch Befehlsfolgen oder auch Transaktionen verstanden werden, die durch ein Eingabesystem bereitgestellt werden und die von dem verteilten Datenbanksystem oder der Netzwerkapplikation ausgeführt werden sollen. Unter Steuerbefehlen können beispielsweise Befehlsfolgen oder Steuerbefehle verstanden werden mit denen mechanische und/oder elektrische und/oder elektromechanische und/oder elektronische Geräte gesteuert werden.

Bei weiteren Ausführungsformen der Kommunikationsvorrichtung umfasst die Kommunikationsvorrichtung ein Überprüfungsmodul, wobei das Überprüfungsmodul dazu eingerichtet ist die Daten zu überprüfen, und wobei die Erfassungsparameter ein Prüfergebnis der Prüfung und/oder Prüfdaten der Prüfung und/oder ein Prüfprotokoll der Prüfung umfassen.

Bei weiteren Ausführungsformen der Kommunikationsvorrichtung sind die Daten Sensordaten, wobei insbesondere die Kommunikationsvorrichtung einen Sensor zum Erfassen der Sensordaten umfasst.

Bei weiteren Ausführungsformen der Kommunikationsvorrichtung ist die Kommunikationsschnittstelle dazu eingerichtet, eine Anfragenachricht zu empfangen, wobei die Anfragenachricht Steuerbefehle zum Steuern eines Gerätes umfasst, wobei das Gerät beispielsweise mit der Kommunikationsvorrichtung verbunden ist, und wobei insbesondere die Kommunikationsvorrichtung das Gerät mittels der Steuerbefehle steuert.

Bei weiteren Ausführungsformen der Kommunikationsvorrichtung umfassen die Daten eine Bestätigung und/oder ein Protokoll über die Ausführung der Steuerbefehle.

Bei weiteren Ausführungsformen der Kommunikationsvorrichtung umfassen die Daten Echtheitsmerkmale eines Produktes, wobei beispielsweise die Echtheitsmerkmale bei der Prüfung durch Überprüfungsmodul überprüft werden und insbesondere ein Ergebnis des Prüfens der Echtheitsmerkmale in den Daten gespeichert werden.

Bei weiteren Ausführungsformen der Kommunikationsvorrichtung umfassen die Erfassungsparameter Sensordaten von Tamper-Sensoren, wobei die Tamper-Sensoren insbesondere Sensoren der Kommunikationsvorrichtung sind, die beispielsweise die Kommunikationsvorrichtung und/oder die Sensoren vor Manipulation schützen.

Gemäß einem weiteren Aspekt betrifft die Erfindung eine Netzwerkapplikation aufweisend:
- eine Kommunikationsschnittstelle zum Empfangen von Datensätzen, wobei
   - der Datensatz Daten und Erfassungsparameter der Daten umfasst
- ein Überprüfungsmodul, wobei
   - das Überprüfungsmodul dazu eingerichtet ist den Datensatz anhand der Daten und/oder anhand von Erfassungsparameter zu überprüfen,
   - für das Überprüfen ein Prüfergebnis durch das Überprüfungsmodul ermittelt wird;
- ein Datensteuerungsmodul, wobei das Datensteuerungsmodul dazu eingerichtet ist, die Verarbeitung der Daten durch die Netzwerkapplikation anhand des Prüfergebnisses zu steuern.

Bei weiteren Ausführungsformen der Netzwerkapplikation ordnet das Datensteuerungsmodul anhand des Prüfergebnisses den Daten einen Vertrauenswert zu.

Bei weiteren Ausführungsformen der Netzwerkapplikation ist die Kommunikationsschnittstelle zum Senden von Anfragenachrichten an eine Kommunikationsvorrichtung eingerichtet, wobei die Anfragenachrichten insbesondere Steuerbefehle zum Steuern von Geräten umfasst, und wobei beispielsweise eine Kommunikationsvorrichtung, die die Steuerbefehle ausführt, insbesondere einen Datensatz mit Daten als Ergebnis der Ausführung der Steuerbefehle an die Netzwerkapplikation übermittelt.

Bei weiteren Ausführungsformen der Netzwerkapplikation und/oder der Kommunikationsvorrichtung ist die Netzwerkapplikation ein verteiltes Datenbanksystem oder eine Blockkette, und/oder die Kommunikationsvorrichtung ist ein Blockketten-Orakel.

Gemäß einem weiteren Aspekt betrifft die Erfindung ein computerimplementiertes Verfahren zum Übermitteln digital signierter Datensätze an eine Netzwerkapplikation mit folgenden Verfahrensschritten
- Erfassen von Daten;
- Speichern der Daten in einem Datensatz;
- Speichern von Erfassungsparameter des Erfassens der Daten in dem Datensatz;
- Schützen des Datensatzes mit einer Prüfsumme;
- Übermitteln des Datensatzes an eine Netzwerkapplikation.

Bei weiteren Ausführungsformen des Verfahrens umfasst das Verfahren weitere Verfahrensschritte oder Merkmale der Kommunikationsvorrichtung, um z. B. die funktionalen Merkmale der Kommunikationsvorrichtung oder der Ausführungsformen der Vorrichtung als Verfahren zu realisieren.

Gemäß einem weiteren Aspekt betrifft die Erfindung ein computerimplementiertes Verfahren zum Verarbeiten (und/oder Empfangen) eines mit einer Prüfsumme geschützten Datensatzes durch eine Netzwerkapplikation mit folgenden Verfahrensschritten:
- Empfangen von Datensätzen, wobei
   - der Datensatz Daten und Erfassungsparameter der Daten umfasst;
- Überprüfen des Datensatzes anhand der Daten und/oder anhand der Erfassungsparameter, wobei
   - für das Überprüfen ein Prüfergebnis ermittelt wird;
- Steuern der Verarbeitung der Daten durch eine Netzwerkapplikation anhand des Prüfergebnisses.

Bei weiteren Ausführungsformen des Verfahrens umfasst das Verfahren weitere Verfahrensschritte oder Merkmale der Kommunikationsvorrichtung, um z. B. die funktionalen Merkmale der Kommunikationsvorrichtung oder der Ausführungsformen der Vorrichtung als Verfahren zu realisieren.

Zusätzlich wird eine Variante des Computerprogrammproduktes mit Programmbefehlen zur Konfiguration eines Erstellungsgeräts, beispielsweise ein 3D-Drucker, ein Computersystem oder ein zur Erstellung von Prozessoren und/oder Geräten geeignete Herstellungsmaschine, beansprucht, wobei das Erstellungsgerät mit den Programmbefehlen derart konfiguriert wird, dass die erfindungsgemäße Kommunikationsvorrichtung und/oder die Netzwerkapplikation erstellt wird.

Darüber hinaus wird eine Bereitstellungsvorrichtung zum Speichern und/oder Bereitstellen des Computerprogrammprodukts beansprucht. Die Bereitstellungsvorrichtung ist beispielsweise ein Datenträger, der das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes Computersystem, ein cloudbasiertes Rechnersystem und/oder virtuelles Rechnersystem, welches das Computerprogrammprodukt vorzugsweise in Form eines Datenstroms speichert und/oder bereitstellt.

Diese Bereitstellung erfolgt beispielsweise als Download in Form eines Programmdatenblocks und/oder Befehlsdatenblocks, vorzugsweise als Datei, insbesondere als Downloaddatei, oder als Datenstrom, insbesondere als Downloaddatenstrom, des vollständigen Computerprogrammprodukts. Diese Bereitstellung kann beispielsweise aber auch als partieller Download erfolgen, der aus mehreren Teilen besteht und insbesondere über ein Peer-to-Peer Netzwerk heruntergeladen oder als Datenstrom bereitgestellt wird. Ein solches Computerprogrammprodukt wird beispielsweise unter Verwendung der Bereitstellungsvorrichtung in Form des Datenträgers in ein System eingelesen und führt die Programmbefehle aus, sodass das erfindungsgemäße Verfahren auf einem Computer zur Ausführung gebracht wird oder das Erstellungsgerät derart konfiguriert, dass es die erfindungsgemäße Kommunikationsvorrichtung und/oder die Netzwerkapplikation erstellt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Dabei zeigen in schematischer Darstellung:
- Fig. 1: ein erstes Ausführungsbeispiel der Erfindung;
- Fig. 2: ein weiteres Ausführungsbeispiel der Erfindung;
- Fig. 3: ein weiteres Ausführungsbeispiel der Erfindung;

In den Figuren sind funktionsgleiche Elemente mit denselben Bezugszeichen versehen, sofern nichts anderes angegeben ist.

Die nachfolgenden Ausführungsbeispiele weisen, sofern nicht anders angegeben oder bereits angegeben, zumindest einen Prozessor und/oder eine Speichereinheit auf, um das Verfahren zu implementieren oder auszuführen.

Auch sind insbesondere einem (einschlägigen) Fachmann in Kenntnis des/der Verfahrensanspruchs/Verfahrensansprüche alle im Stand der Technik üblichen Möglichkeiten zur Realisierung von Produkten oder Möglichkeiten zur Implementierung selbstverständlich bekannt, sodass es insbesondere einer eigenständigen Offenbarung in der Beschreibung nicht bedarf. Insbesondere können diese gebräuchlichen und dem Fachmann bekannten Realisierungsvarianten ausschließlich per Hardware (komponenten) oder ausschließlich per Software (komponenten) realisiert werden. Alternativ und/oder zusätzlich kann der Fachmann im Rahmen seines fachmännischen Könnens weitestgehend beliebige erfindungsgemäße Kombinationen aus Hardware(komponenten) und Software(komponenten) wählen, um erfindungsgemäße Realisierungsvarianten umzusetzen.

Eine erfindungsgemäße Kombination aus Hardware(komponenten) und Software(komponenten) kann insbesondere dann eintreten, wenn ein Teil der erfindungsgemäßen Wirkungen vorzugsweise ausschließlich durch Spezialhardware (z. B. einem Prozessor in Form eines ASIC oder FPGA) und/oder ein anderer Teil durch die (prozessor- und/oder speichergestützte) Software bewirkt wird.

Insbesondere ist es angesichts der hohen Anzahl an unterschiedlichen Realisierungsmöglichkeiten unmöglich und auch für das Verständnis der Erfindung nicht zielführend oder notwendig, all diese Realisierungsmöglichkeiten zu benennen. Insofern sollen insbesondere all die nachfolgenden Ausführungsbeispiele lediglich beispielhaft einige Wege aufzeigen, wie insbesondere solche Realisierungen der erfindungsgemäßen Lehre aussehen könnten.

Folglich sind insbesondere die Merkmale der einzelnen Ausführungsbeispiele nicht auf das jeweilige Ausführungsbeispiel beschränkt, sondern beziehen sich insbesondere auf die Erfindung im Allgemeinen. Entsprechend können vorzugsweise Merkmale eines Ausführungsbeispiels auch als Merkmale für ein anderes Ausführungsbeispiel dienen, insbesondere ohne, dass dies expliziert in dem jeweiligen Ausführungsbeispiel genannt sein muss.

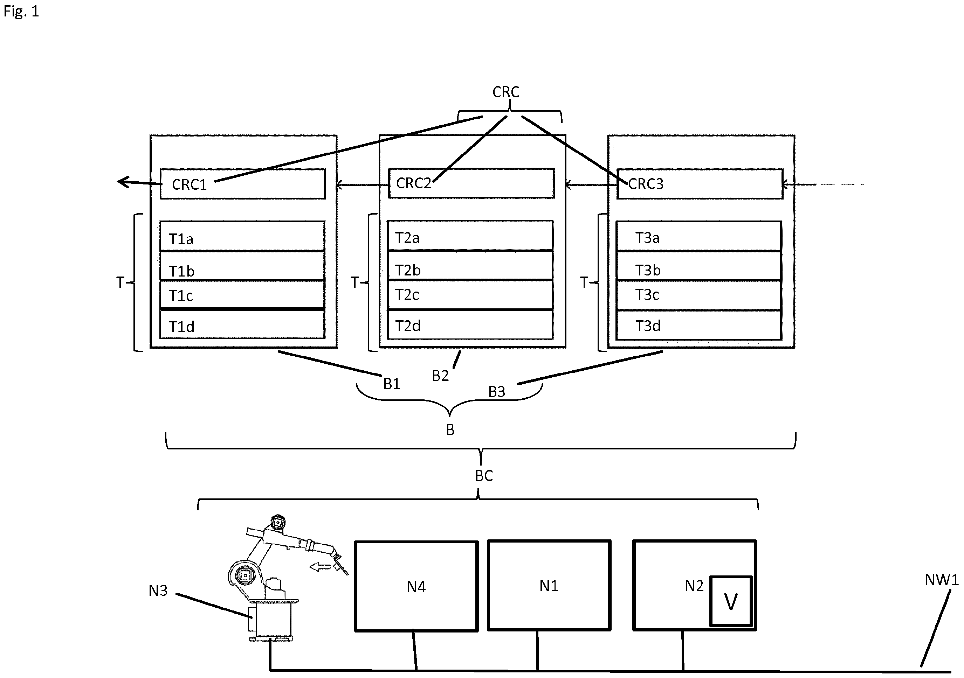

Fig. 1 zeigt ein cyberphysikalisches System, das eine Netzwerk-Applikation und deren Infrastruktur umfasst.

Das in Fig. 1 gezeigte System kann beispielsweise eine Netzwerk-Applikation in Form einer Blockkette oder ein verteiltes Datenbanksystem umfassen, wobei das verteilte Datenbanksystem z. B. mittels einer Blockkette BC realisiert ist.

In Fig. 1 sind ein erster Knoten N1 (z. B. ein Mining Knoten einer Blockkette), ein zweiter Knoten N2 (z. B. ein Blockketten-Orakel mit z. B. einem Sensor), ein dritter Knoten N3 (z. B. ein erstes Gerät wie ein Fertigungsroboter) und ein vierter Knoten N4 (z. B. eine Blockketten Wallet) gezeigt, die die Knoten der Blockkette BC des verteilten Datenbanksystems beispielshaft bilden. Die Knoten sind dabei z. B. über ein erstes Kommunikationsnetzwerk NW1 (z. B. ein WAN, LAN oder das Internet) miteinander verbunden. Das verteilte Datenbanksystem kann zudem noch eine Vielzahl weiterer Knoten umfassen. Mit anderen Worten sind eine Vielzahl von Geräten (die Knoten N1 - N4) in Fig. 1 gezeigt, die mittels der Netzwerkapplikation in Form eines verteilten Datenbanksystems kommunikativ verbunden sind.

Beispielsweise umfasst einer der Knoten, z. B. der zweite Knoten N2 eine Kommunikationsvorrichtung V.

Die Kommunikationsvorrichtung V umfasst eine Kommunikationsschnittstelle, ein Erfassungsmodul und ein Übermittlungsmodul, die beispielsweise über einen Bus kommunikativ verbunden sind.

Die Kommunikationsschnittstelle ist dazu eingerichtet, mit der Netzwerkapplikation (z. B. ein Knoten der Netzwerkapplikation) zu kommunizieren, z. B. einem anderen Knoten wie z. B. dem ersten Knoten N1, den dritte Knoten N3 oder den vierten Knoten N4.

Die Kommunikationsschnittstelle kann beispielsweise als Netzwerkschnittstelle oder als andere Schnittstelle (z. B. eine PCI- oder USB-Schnittstelle) ausgebildet sein, damit z. B. die Kommunikationsvorrichtung V einfach im zweiten Knoten Nn installiert werden kann oder mit dem zweiten Knoten N2 verbunden werden kann.

Das Erfassungsmodul ist dazu eingerichtet, Daten zu erfassen und in einem Datensatz zu speichern, wobei das Erfassungsmodul Erfassungsparameter des Erfassens der Daten in dem Datensatz speichert.

Das Übermittlungsmodul ist dazu eingerichtet, den Datensatz mit einer Prüfsumme zu schützen (z. B. mittels einer digitalen Signatur) und mittels der Kommunikationsschnittstelle an die Netzwerkapplikation zu übermitteln.

Des Weiteren zeigt die Fig. 1 Blöcke B, beispielsweise einen ersten Block B1, einen zweiten Block B2 und einen dritten Block B3, der Blockkette BC, wobei hier insbesondere ein Ausschnitt der Blockkette BC exemplarisch gezeigt ist.

Die Blöcke B umfassen jeweils mehrere Transaktionen T. Der erste Block B1 umfasst beispielsweise eine erste Transaktion T1a, eine zweite Transaktion T1b, eine dritte Transaktion T1c und eine vierte Transaktion T1d.

Der zweite Block B2 umfasst beispielsweise eine fünfte Transaktion T2a, eine sechste Transaktion T2b, eine siebte Transaktion T2c und eine achte Transaktion T2d.

Der dritte Block B3 umfasst beispielsweise eine neunte Transaktion T3a, eine zehnte Transaktion T3b, eine elfte Transaktion T3c und eine zwölfte Transaktion T3d.

Die Blöcke B umfassen jeweils zusätzlich noch eine der Verkettungsprüfsummen CRC, die abhängig vom direkten VorgängerBlock gebildet wird. Somit umfasst der erste Block B1 eine erste Verkettungsprüfsumme CRC1 von seinem Vorgängerblock, der zweite Block B2 eine zweite Verkettungsprüfsumme CRC2 vom ersten Block B1, und der dritte Block B3 eine dritte Verkettungsprüfsumme CRC3 vom zweiten Block B2.

Die jeweilige Verkettungsprüfsumme CRC1, CRC2, CRC3 wird vorzugsweise über den Block-Header des entsprechenden Vorgängerblockes gebildet. Die Verkettungsprüfsummen CRC können vorzugsweise unter Verwendung einer kryptographischen HashFunktion wie z.B. SHA-256, KECCAK-256, BLAKE2 oder SHA-3 gebildet werden. Beispielsweise kann die Verkettungsprüfsumme zusätzlich über die Datenblockprüfsumme berechnet werden oder der Header umfasst die Datenblockprüfsumme (die Datenblockprüfsumme ist im Nachgang erläutert).

Zusätzlich kann jeder der Blöcke eine Datenblockprüfsumme umfassen. Diese kann beispielsweise mittels eines Hash-Baumes realisiert werden.

Um den Hash-Baum zu bilden, wird für jede Transaktion eines Daten(blockes) eine Transaktionsprüfsumme (z. B. ebenfalls ein Hash-Wert) berechnet. Alternativ oder zusätzlich kann eine Transaktionsprüfsumme, die vom Erzeuger der Transaktion vorzugsweise beim Erzeugen der Transaktion erstellt wurde, hierfür weiterverwendet werden.

Üblicherweise wird für einen Hash-Baum, z. B. ein Merkle Tree oder Patricia Tree, verwendet, dessen Wurzel-Hash-Wert/Wurzel-Prüfsumme vorzugsweise als entsprechende Datenblockprüfsumme in den jeweiligen Blöcken hinterlegt wird.

In einer Variante wird die Datenblockprüfsumme als Verkettungsprüfsumme verwendet.

Ein Block kann weiterhin einen Zeitstempel, eine digitale Signatur, einen Proof-of-Work-Nachweis aufweisen, so wie es in den Ausführungsformen der Erfindung erläutert wurde. Ebenso ist es möglich, dass ein Block einen Proof-of-Possession-Nachweis oder einen anderen Berechtigungsnachweis aufweist.

Die Blockkette BC selbst wird durch eine Blockketten-Infrastruktur mit den mehreren Blockketten-Knoten (Knoten N1, N2, N3, N4 und weiteren Blöcken) realisiert. Bei den Knoten kann es sich beispielsweise um Blockkettenorakel oder vertrauenswürdige Knoten handeln.

Der Datensatz kann beispielsweise eine der Transaktionen T (z. B. die sechste Transaktion T2b) der Blockkette BC sein, die durch den zweiten Knoten N2 erzeugt wurde. Hierzu kann der Knoten

Die Erfindung ist z. B. für Knoten einer Netzwerkapplikation wie z. B. Blockketten-Orakel oder Blockketten-Wallets geeignet.

Die Kommunikationsvorrichtung kann z. B. zusätzlich ein Überprüfungsmodul umfassen, wobei das das Überprüfungsmodul dazu eingerichtet ist die Daten zu überprüfen. Die Erfassungsparameter können dabei ein Prüfergebnis der Prüfung und/oder Prüfdaten der Prüfung und/oder ein Prüfprotokoll der Prüfung umfassen.

Die Daten können dabei Sensordaten sein, wobei insbesondere die Kommunikationsvorrichtung einen Sensor zum Erfassen der Sensordaten umfasst. Die Sensordaten können beispielsweise von einem oder über ein Gerät (z. B. dem dritten Knoten N3) erfasst werden.

In einer Variante ist die Kommunikationsschnittstelle dazu eingerichtet, eine Anfragenachricht (dies kann z. B. auch eine der Transaktionen T sein) zu empfangen, wobei die Anfragenachricht Steuerbefehle zum Steuern des Gerätes umfasst, wobei das Gerät beispielsweise mit der Kommunikationsvorrichtung V verbunden ist. Insbesondere steuert die Kommunikationsvorrichtung das Gerät mittels der Steuerbefehle. Beispielsweise wird ein Fertigungsroboter, der z. B. als der dritte Knoten N3 ausgebildet ist, mittels der Steuerbefehle gesteuert und/oder die Sensordaten überwachen die Ausführung der Steuerbefehle. Die Daten können dabei eine Bestätigung und/oder ein Protokoll über die Ausführung der Steuerbefehle umfassen, wobei diese (z. B. die Bestätigung oder das (Prüf-)Protokoll) z. B. mittels der Sensordaten erstellt wurden bzw. anhand der Sensordaten die Bestätigung de Ausführung ermittelt und/oder erzeugt wurde.

Die Netzwerkapplikation oder einer der Knoten der Netzwerkapplikation (z. B. der erste Knoten) umfasst zudem eine Kommunikationsschnittstelle, ein Überprüfungsmodul und ein Datensteuerungsmodul, die z. B. über einen Bus kommunikativ miteinander verbunden sind.

Die Kommunikationsschnittstelle ist zum Empfangen von Datensätzen eingerichtet, wobei der Datensatz (oder ein entsprechender Datensatz) Daten und Erfassungsparameter der Daten umfasst.

Das Überprüfungsmodul ist dazu eingerichtet den Datensatz anhand der Daten und/oder anhand von Erfassungsparameter zu überprüfen, wobei für das Überprüfen ein Prüfergebnis durch das Überprüfungsmodul ermittelt wird.

Das Datensteuerungsmodul ist dazu eingerichtet, die Verarbeitung der Daten durch die Netzwerkapplikation anhand des Prüfergebnisses zu steuern.

Die Erfindung ist vorteilhaft, da bekannte Ansätze zu sicheren Blockketten-Orakeln nur den Schutz des Blockketten-Orakels selbst betreffen. Nachteilig ist dabei, dass dies aber unabhängig von der eigentlichen Blockketten-Infrastruktur erfolgt.

Mit der Erfindung wird z. B. ein verbesserter Schutz von Blockketten-Orakeln erreicht. Dazu stellt z. B. der zweite Knoten N2 (z. B. ein Blockchain-Orakel) die ermittelte Information in Form der Daten der Netzwerkapplikation (z. B. Blockketten-Infrastruktur) bereit. Mittels der Erfassungsparameter wird jedoch noch eine weitere Information bereitgestellt, die z. B. angibt, auf welche Art diese Information ermittelt und/oder überprüft würde, bevor die Daten z. B. in einer Transaktion durch das Blockketten-Orakel gespeichert wurden und dann z. B. als digital signierte Transaktion der Netzwerkapplikation bereitgestellt wird. Dadurch macht der Knoten N2 innerhalb der Blockketten-Infrastruktur transparent, wie das Blockketten-Orakel die Validität der bestätigten Information (z. B. der Sensordaten) geprüft hat.

Dadurch kann z. B. ein Smart Contract (z. B. Programm-Code oder Chain-Code) der Blockketten-Infrastruktur oder ein anderes auf die Blockketten-Infrastruktur zugreifendes System die Vertrauenswürdigkeit der von einem Blockketten-Orakel bereitgestellten Information prüfen und davon abhängig von dem Prüfergebnis die innerhalb der Blockkette bestätigte Information akzeptieren oder verwerfen, bzw. ihr davon abhängig einen Vertrauenswert zuordnen (z.B. als diskreter Wert wie "trusted", "untrusted", "weakly trusted" oder als Zahlenwert, z.B. im Bereich 0 bis 1 (0: nicht vertrauenswürdig, 1: voll vertrauenswürdig) .

Mit anderen Worten wird die Verarbeitung der Daten durch die Netzwerkapplikation anhand des Prüfergebnisses gesteuert, in dem das Prüfergebnis vom einem Smart-Contract erstellt und/oder ausgewertet wird.

Beispielsweise kann in einer Variante das Blockketten-Orakel mittels des Datensatzes Informationen zu einem Internet-Service (Web-Seite) bestätigen, indem es z. B. den Web-Server authentisiert und/oder die Integrität von empfangenen Daten bzw. der Datenquelle (z. B. Daten, die der Web-Service bereitstellt) überprüft. Dazu kann es insbesondere ein TLS-Protokoll verwenden. Es stellt, neben der Information der Web-Seite, z. B. zusätzlich die Erfassungsparameter bereit.

Die Erfassungsparameter umfassen dabei z. B. die durchgeführten Integritätsprüfungen. Der Datensatz in Form einer Bloccketten-Transkation stellt diese Information dann bereit (z. B. als Teil der den Inhalt bestätigenden Orakel-Transaktion oder zumindest dieser zuordenbar). Die Erfassungsparameter können dabei eines oder mehrere der folgenden Daten umfassen oder auch eine Kombination aus den nachfolgend aufgelisteten Daten umfassen:
- Zertifikat / Public Key der Datenquelle (Web-Server), Zertifikatskette, Zertifikatswiderrufsprüfung (CRL, OCSP)
- Ausgehandelte TLS-Protokolloptionen (insbesondere Cipher Suite, z.B. Algorithmen und Schlüssellänge einer Verschlüsselung und/oder eines kryptographischen Integritätsschutzes)
- HTTP-Header (z.B. Information zu Typ der Web-Server-Implementierung, Version, Betriebssystem)
- Integritätsattestierung eines Web-Servers (z.B. Linux IMA)
- Zeitstempel der Datenpakete (zwischen Blockchain-Orakel und Web-Server). Dies ermöglicht, anhand des Zeitverhaltens die Datenkommunikation zu plausibilisieren.

Bei einem Blockketten-Orakel, das eine physikalische SensorInformation umfasst, sind beispielsweise folgende Prüfungen mittels des Überprüfungsmodul möglich:
- Plausibilisierung der Roh-Messdaten (z.B. Vergleich mit physikalischem Modell, Quervergleich mehrerer Messungen, Quervergleich zwischen mehreren physikalischen Sensoren)
- Fingerprinting der Datenquelle (z. B. Rauschsignal-Fingerprint des Sensors prüfen)
- Physikalischer Tamperschutz der Messanordnung (manipulationsgeschützt installierte Verkabelung und Sensoren)

Mit der Erfindung kann somit z. B. ein System realisiert werden, das die Kommunikationsvorrichtung V und eine Netzwerkapplikation umfasst. Die Kommunikationsvorrichtung V Sensoren kann Sensoren umfassen und z. B. Messwerte eines Automatisierungssystems oder einer Maschine (z. B. des dritten Knotens N3) in die Blockkette einstellen. Eine Kommunikationsvorrichtung V kann jedoch grundsätzlich auch andere Daten über den Datensatz bereitstellen. Dies können z. B. Daten aus einer Datenbank oder von einem Web-Server sein, die an die Netzwerkapplikation (z. B. der Blockkette BC) übertragen werden.

In einer weiteren Variante ist die Kommunikationsvorrichtung V als aktiver Knoten ausgebildet, sodass aktiv über einen Aktuator eine Aktion abhängig von der Anfragenachricht (z. B. auch Request-Transaktion oder nur als Transaktion bezeichnet) ausführt wird. Hierzu umfasst die Anfragenachricht z. B. Steuerbefehle um z. B. das Öffnen oder Schließen eines Ventils, das Erhitzen oder Kühlen eines Stoffes oder das Ändern einer Motordrehzahl, z. B. für einen Rührer einer verfahrenstechnischen Anlage zu steuern. Die Kommunikationsvorrichtung V stellt dann z. B. die Bestätigung in Form einer Bestätigungstransaktion bereit, dass die Aktion ausgeführt wurde bzw. einen Ergebniscode (Success/Error) oder eine neue Stellgröße oder ein gemessener Effekt der Aktion.

In einer weiteren Variante erfasst die Kommunikationsvorrichtung V eine (oder mehrere) physikalische Größen (z.B. Temperatur, Druck, pH-Wert, Viskosität, Feuchtigkeit, Beschleunigung) mittels Sensoren und/oder über eine Ein-/Ausgabeschnittstelle einer Dateneingangserfassungseinheit. Die erfassten Daten in Form von Messdaten werden in dem Datensatz gespeichert, wobei der Datensatz noch entsprechende Erfassungsparameter umfasst. Der Datensatz wird dann einer Netzwerkapplikation (z. B. der Blockkette BC) bereitgestellt. Weiterhin erfolgt durch die Kommunikationsvorrichtung V eine Prüfung der Messdaten mittels des Überprüfungsmoduls. Dazu können Tamper-Sensoren der Kommunikationsvorrichtung V ausgewertet werden, um eine Manipulation der die Kommunikationsvorrichtung V oder der Sensormessanordnung zu ermitteln.

Alternativ oder zusätzlich kann ein "Fingerprinting" des Sensorsignals erfolgen, z. B. kann der Rauschsignalanteil überprüft werden. Abhängig davon bildet eine Datenintegritätsprüfeinheit einen Datenintegritätsprüfinformation DICI (data integrity check information), die angibt, welche Prüfungen durchgeführt wurden und ggf. ein mehrwertiger Prüfwert (z.B. "good", "bad", "unknown" oder ein Zahlenwert, z.B. im Bereich 0 bis 1 oder ganzzahlig 0..255). Die Erfassungsparameter umfassen beispielsweise ebenfalls die Datenintegritätsprüfinformation DICI.

Der Datensatz (oder die Transaktion) wird unter Nutzung eines Secure Elements oder eines Kryptographiemoduls digital signiert und über die Kommunikationsschnittstelle der Kommunikationsvorrichtung einer der Netzwerkapplikation zur Bestätigung und/oder Validierung bereitgestellt. Beispielsweise wird die Transaktion z. B. der Blockketten-Infrastruktur der Blockkette BC zur Bestätigung in einem Block der Blockchain bereitgestellt.

Vorteilhaft ist dabei z. B., dass ein Smart Contract oder ein externer Nutzer (z. B. ein Software-Agent einer Steuerungsanlage wie eine KI oder des Systems) der Blockketten-Infrastruktur, die durch das Blockketten-Orakel bereitgestellten Messdaten nicht blind als gültiges Fakt verwenden kann, sondern selbst abhängig von den Erfassungsparametern entscheiden kann, ob die Daten als gültig akzeptiert werden. D. h. obwohl beispielsweise die Transaktion in der Blockkette als gültig bestätigt ist, kann danach feingranular, abhängig von der Kritikalität der Anwendung, die Vertrauenswürdigkeit der Daten ermittelt werden.

In einer weiteren Variante werden dem Secure Element oder dem Kryptographiemodul die Erfassungsparameter (z. B. die DICI-Information) bereitgestellt. Das Secure Element oder das Kryptographiemodul kann die Erfassungsparameter prüfen und davon abhängig eine Signaturfunktion bzw. die Nutzung eines Signaturschlüssels freischalten.

Die Kommunikationsvorrichtung V, z. B. in Form eines Blockchain-Orakels, kann insbesondere Daten bei der Verfolgung von Gütern entlang von Lieferketten der Blockchain-Infrastruktur bereitstellen. Dazu kann es Güter identifizieren und anhand von unterschiedlichen Echtheitsmerkmalen authentisieren. Beispiele für Echtheitsmerkmale sind z. B. ein Typschild, eine kryptographische Originalproduktauthentisierung, das Überprüfen von Hologrammen oder Kippfarben-Sicherheitslabeln, das Überprüfen von Wasserzeichen oder von sich zufällig ergebenden Oberflächeneigenschaften / Materialeigenschaften des Guts.

Die Kommunikationsvorrichtung V kann ein Gut anhand einer unterschiedlichen Teilmenge von solchen Echtheitsmerkmalen authentisieren.

Weiterhin können die Erfassungsparameter Zusatzinformationen zum Produkt umfassen, wie z. B. den Zeitpunkt und den Ort der Erfassung, die Temperatur, Luftfeuchtigkeit oder ein Bild des Guts ermitteln.

Die Kommunikationsvorrichtung V bildet den Datensatz in Form einer Transaktion, die z. B. die erfasste Daten in Form von Nutzdaten (Identifier des Guts, Temperatur, Ort, Zeitstempel) angeben und zusätzlich in den Erfassungsparametern eine Information (Datenintegritätsprüfinformation) zu durchgeführten Überprüfungen angeben. Dabei können z. B. angegeben werden, welche Echtheitsmerkmale des Guts überprüft wurden und/oder ein daraus abgeleiteten Echtheitsüberprüfungs-Vertrauenswert (z. B. wenn verborgen werden soll, wenn verdeckte Echtheitsmerkmale von manchen Blockchain-Orakeln ausgewertet werden) ermittelt werden, der in den Erfassungsparametern gespeichert wird.

Auch kann bei der Überprüfung eines Echtheitsmerkmals ein Vertrauenswert ermittelt werden (z.B. 30%, 80% oder 95% oder 99%), der angibt, wie gut das ermittelte, gemessene Echtheitsmerkmal mit einer Referenzinformation übereinstimmt. Das Ergebnis dieser Prüfung wird z. B. ebenfalls in den Erfassungsparametern gespeichert.

Weiterhin kann das Blockchain-Orakel eine Information von Tamper-Sensoren bereitstellen, die das Blockchain-Orakel und die Sensoren (Messanordnung) vor Manipulation schützen.

In einer weiteren Variante ermittelt das die Kommunikationsvorrichtung V die Daten, indem es sie von einem Web-Service über ein Netzwerk abfragt. Dabei wird der Web-Server durch die Kommunikationsvorrichtung authentisiert, z. B. über ein TLS-Sicherheitsprotokoll. Die Kommunikationsvorrichtung bildet den Datensatz in Form einer Transaktion, die die vom Web-Service bereitgestellten Daten umfasst. Zusätzlich speichert die Kommunikationsvorrichtung die Erfassungsparameter als Zusatzinformation in die von der Kommunikationsvorrichtung gebildeten Transaktion. Die Erfassungsparameter umfassen dabei z. B. die Information wie das Blockchain-Orakel den Web-Service authentisiert hat und wie die Kommunikationsverbindung zum Web-Service kryptographisch geschützt war.

Diese Zusatzinformation (Datenintegritätsprüfinformation) kann z. B. folgende Informationen umfassen (entweder einzeln oder eine Kombination der nachfolgenden Informationen).
- IP-Adresse, DNS-Name des Web-Service
- Die verwendete Übertragungsstrecke (die z.B. mittels traceroute ermittelbar ist), d.h. die IP-Adressen von IP-Zwischenknoten (Routern)
- Die verwendete Netzwerkzugangstechnologie (z.B. Ethernet, WLAN, Mobilfunk) und die dabei verwendeten Security-Optionen zum Schutz des Netzwerkzugangs
- Angabe, ob DNSsec oder DNS over TLS oder ungeschütztes DNS verwendet wurde.
- HTTP-Header-Information des Web-Service
- Server-Zertifikat des Web-Service
- Zertifikatskette des Server-Zertifikats und/oder verwendetes Wurzel-Zertifikat zur Überprüfung der Zertifikatskette
- Verwendetes Sicherheitsprotokoll (z.B. TLS1.1, TLS1.2. TLS1.3, mcTLS)
- Ausgehandelte Cipher-Suite des Sicherheitsprotokolls
- Ausgehandelte bzw. verwendete Protokolloptionen des Sicherheitsprotokolls (z. B. Session Resumption)
- Vorhandene Zwischenknoten bei einem Multi-Kontext-TLS (auch als Enterprise TLS bezeichnet, ETLS), bei dem Zwischenknoten bei einer kryptographisch geschützten Kommunikationsverbindung die verschlüsselten, kryptographisch geschützten Daten mitlesen und/oder modifizieren können).
- Eine Aufzeichnung des TLS-Handshakes

Die Kommunikationsvorrichtung V und/oder die Knoten und/oder die Infrastruktur der Netzwerkapplikation können beispielsweise jeweils zusätzlich noch eine weitere oder mehrere weitere Komponente/n umfassen, wie beispielsweise einen Prozessor, eine Speichereinheit, weitere Kommunikationsschnittstellen (z. B. Ethernet, WLAN, USB, Feldbus, PCI), ein Eingabegerät, insbesondere eine Computertastatur oder eine Computermaus, und ein Anzeigegerät (z. B. einen Monitor). Der Prozessor kann beispielsweise mehrere weitere Prozessoren umfassen, die insbesondere zur Realisierung von weiteren Ausführungsbeispielen verwendet werden können.

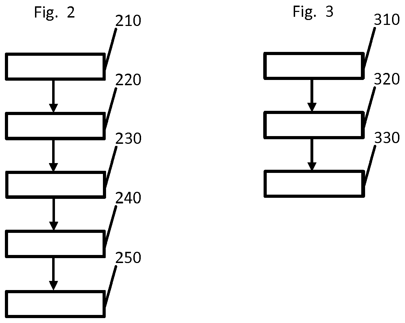

Die Fig. 2 zeigt ein weiteres Ausführungsbeispiel der Erfindung, das als Ablaufdiagramm für ein Verfahren dargestellt ist.

Das Verfahren ist vorzugsweise rechnergestützt realisiert.

Im Einzelnen wird in diesem Ausführungsbeispiel ein computerimplementiertes Verfahren zum Übermitteln digital signierter Datensätze an eine Netzwerkapplikation.
- Speichern von Erfassungsparameter des Erfassens der Daten in dem Datensatz;
- Schützen des Datensatzes mit einer Prüfsumme;
Übermitteln des Datensatzes an eine Netzwerkapplikation.

Das Verfahren umfasst einen ersten Verfahrensschritt 210 zum Erfassen von Daten.

Das Verfahren umfasst einen zweiten Verfahrensschritt 220 zum Speichern der Daten in einem Datensatz.

Das Verfahren umfasst einen dritten Verfahrensschritt 230 zum Speichern von Erfassungsparameter des Erfassens der Daten in dem Datensatz.

Das Verfahren umfasst einen vierten Verfahrensschritt 240 zum Schützen des Datensatzes mit einer Prüfsumme.

Das Verfahren umfasst einen fünften Verfahrensschritt 250 zum Übermitteln des Datensatzes an eine Netzwerkapplikation.

Die Fig. 3 zeigt ein weiteres Ausführungsbeispiel der Erfindung, das als Ablaufdiagramm für ein Verfahren dargestellt ist.

Das Verfahren ist vorzugsweise rechnergestützt realisiert.

Das Verfahren umfasst einen ersten Verfahrensschritt 310 zum Empfangen von Datensätzen, wobei der Datensatz Daten und Erfassungsparameter der Daten umfasst.

Das Verfahren umfasst einen zweiten Verfahrensschritt 320 zum Überprüfen des Datensatzes anhand der Daten und/oder anhand der Erfassungsparameter, wobei für das Überprüfen ein Prüfergebnis ermittelt wird.

Das Verfahren umfasst einen dritten Verfahrensschritt 330 zum Steuern der Verarbeitung der Daten durch die Netzwerkapplikation anhand des Prüfergebnisses.

Mit der Erfindung kann beispielsweise die Sicherheit von Blockketten-Orakeln verbessert werden, indem zusätzliche Informationen in Form von Erfassungsparametern durch eine Netzwerkapplikation wie einer Blockkette ausgewertet werden.

Obwohl die Erfindung im Detail durch die Ausführungsbeispiele näher illustriert und beschrieben wurde, ist die Erfindung nicht durch die offenbarten Beispiele eingeschränkt, und andere Variationen können vom Fachmann hieraus abgeleitet werden, ohne den Schutzumfang der Erfindung zu verlassen.
[1] Andreas M. Antonopoulos "Mastering Bitcoin: Unlocking Digital Cryptocurrencies", O'Reilly Media, December 2014
[2] Roger M. Needham, Michael D. Schroeder "Using encryption for authentication in large networks of computers" ACM: Communications of the ACM. Band 21, Nr. 12 Dezember 1978,
[3] Ross Anderson "Security Engineering. A Guide to Building Dependable Distributed Systems" Wiley, 2001
[4] Henning Diedrich "Ethereum: Blockchains, Digital Assets, Smart Contracts, Decentralized Autonomous Organizations", CreateSpace Independent Publishing Platform, 2016
[5] "The Ethereum Book Project/Mastering Ethereum" https://github.com/ethereumbook/ethereumbook, Stand 5.10.2017
[6] Leemon Baird "The Swirlds Hashgraph Consensus Algorithm: Fair, Fast, Byzantine Fault Tolerance", Swirlds Tech Report SWIRLDS-TR-2016-01, 31.5.2016
[7] Leemon Baird "Overview of Swirlds Hashgraph", 31.5.2016
[8] Blockchain Oracles https://blockchainhub.net/blockchain-oracles/ Stand 14.03.2018
[9] Joseph Poon, Thaddeus Dryja: The Bitcoin Lightning Network: Scalable Off-Chain Instant Payments. 14. Januar 2016, abgerufen am 30. Juni 2018 (PDF; 3 MB, englisch).

## Patentansprüche

1. Kommunikationsvorrichtung aufweisend:
- eine Kommunikationsschnittstelle, wobei die Kommunikationsschnittstelle dazu eingerichtet ist, mit einer Netzwerkapplikation zu kommunizieren;
- ein Erfassungsmodul, wobei
∘ das Erfassungsmodul dazu eingerichtet ist, Daten zu erfassen und in einem Datensatz zu speichern,
∘ das Erfassungsmodul Erfassungsparameter des Erfassens der Daten in dem Datensatz speichert;
- ein Übermittlungsmodul, wobei
∘ das Übermittlungsmodul dazu eingerichtet ist, den Datensatz mittels einer Prüfsumme zu schützen und mittels der Kommunikationsschnittstelle an die Netzwerkapplikation zu übermitteln.

2. Kommunikationsvorrichtung nach Anspruch 1, wobei
- die Kommunikationsvorrichtung ein Überprüfungsmodul umfasst,
- das Überprüfungsmodul dazu eingerichtet ist die Daten zu überprüfen,
- die Erfassungsparameter ein Prüfergebnis der Prüfung und/oder Prüfdaten der Prüfung und/oder ein Prüfprotokoll der Prüfung umfassen.

3. Kommunikationsvorrichtung nach einem der vorhergehenden Ansprüche, wobei
- die Daten Sensordaten sind,
- insbesondere die Kommunikationsvorrichtung einen Sensor zum Erfassen der Sensordaten umfasst.

4. Kommunikationsvorrichtung nach einem der vorhergehenden Ansprüche, wobei
- die Kommunikationsschnittstelle dazu eingerichtet ist eine Anfragenachricht zu empfangen,
- die Anfragenachricht Steuerbefehle zum Steuern eines Gerätes umfasst, wobei das Gerät beispielsweise mit der Kommunikationsvorrichtung verbunden ist,
- insbesondere die Kommunikationsvorrichtung das Gerät mittels der Steuerbefehle steuert.

5. Kommunikationsvorrichtung nach Anspruch 4, wobei
- die Daten eine Bestätigung und/oder ein Protokoll über die Ausführung der Steuerbefehle umfassen.

6. Kommunikationsvorrichtung nach einem der vorhergehenden Ansprüche, wobei
- die Daten Echtheitsmerkmale eines Produktes umfassen,
- beispielsweise die Echtheitsmerkmale bei der Prüfung durch Überprüfungsmodul überprüft werden und insbesondere ein Ergebnis des Prüfens der Echtheitsmerkmale in den Daten gespeichert werden.

7. Kommunikationsvorrichtung nach einem der vorhergehenden Ansprüche, wobei
- die Erfassungsparameter Sensordaten von Tamper-Sensoren umfassen,
- die Tamper-Sensoren insbesondere Sensoren der Kommunikationsvorrichtung sind, die beispielsweise die Kommunikationsvorrichtung und/oder die Sensoren vor Manipulation schützen.

8. Netzwerkapplikation aufweisend:
- eine Kommunikationsschnittstelle zum Empfangen von Datensätzen, wobei
- der Datensatz Daten und Erfassungsparameter der Daten umfasst
- ein Überprüfungsmodul, wobei
- das Überprüfungsmodul dazu eingerichtet ist den Datensatz anhand der Daten und/oder anhand von Erfassungsparameter zu überprüfen,
- für das Überprüfen ein Prüfergebnis durch das Überprüfungsmodul ermittelt wird;
- ein Datensteuerungsmodul, wobei das Datensteuerungsmodul dazu eingerichtet ist, die Verarbeitung der Daten durch die Netzwerkapplikation anhand des Prüfergebnisses zu steuern.

9. Netzwerkapplikation nach Anspruch 8, wobei das Datensteuerungsmodul anhand des Prüfergebnisses den Daten einen Vertrauenswert zuordnet.

10. Netzwerkapplikation nach Anspruch 8 oder 9, wobei
- die Kommunikationsschnittstelle zum Senden von Anfragenachrichten an eine Kommunikationsvorrichtung eingerichtet ist,
- die Anfragenachrichten insbesondere Steuerbefehle zum Steuern von Geräten umfasst,
- beispielsweise eine Kommunikationsvorrichtung, die die Steuerbefehle ausführt, insbesondere einen Datensatz mit Daten als Ergebnis der Ausführung der Steuerbefehle an die Netzwerkapplikation übermittelt.

11. Netzwerkapplikation oder Kommunikationsvorrichtung nach einem der vorhergehenden Ansprüche, wobei
- die Netzwerkapplikation ein verteiltes Datenbanksystem oder eine Blockkette ist, und/oder
- die Kommunikationsvorrichtung ein Blockketten-Orakel ist.

12. Computerimplementiertes Verfahren zum Übermitteln digital signierter Datensätze an eine Netzwerkapplikation mit folgenden Verfahrensschritten
- Erfassen von Daten;
- Speichern der Daten in einem Datensatz;
- Speichern von Erfassungsparameter des Erfassens der Daten in dem Datensatz;
- Schützen des Datensatzes mit einer Prüfsumme;
- Übermitteln des Datensatzes an eine Netzwerkapplikation.

13. Computerimplementiertes Verfahren zum Verarbeiten eines mit einer Prüfsumme geschützten Datensatzes durch eine Netzwerkapplikation mit folgenden Verfahrensschritten:
- Empfangen von Datensätzen, wobei
- der Datensatz Daten und Erfassungsparameter der Daten umfasst;
- Überprüfen des Datensatzes anhand der Daten und/oder anhand der Erfassungsparameter, wobei
- für das Überprüfen ein Prüfergebnis ermittelt wird;
- Steuern der Verarbeitung der Daten durch eine Netzwerkapplikation anhand des Prüfergebnisses.

14. Computerprogrammprodukt mit Programmbefehlen zur Durchführung des Verfahrens nach Anspruch 12 und/oder 13.

15. Bereitstellungsvorrichtung für das Computerprogrammprodukt nach Anspruch 14, wobei die Bereitstellungsvorrichtung das Computerprogrammprodukt speichert und/oder bereitstellt.
